# EUROPÄISCHE PATENTSCHRIFT

(11) **EP 1 968 423 B1**
(45) Veröffentlichungstag und Bekanntmachung des Hinweises auf die Patenterteilung: **20.09.2017**
(21) Anmeldenummer: 06830278.5
(22) Anmeldetag: 01.12.2006
(51) Int. Cl.: A47L 15/42, A47L 15/46

(54) **REINIGUNGSPROGRAMM FÜR EINE GESCHIRRSPÜLMASCHINE MIT VERKÜRZTER LAUFZEIT BEI KONSTANTER REINIGUNGSLEISTUNG**
WASHING PROGRAMME FOR A DISHWASHER HAVING A SHORTER CYCLE WITH A CONSTANT CLEANING EFFICIENCY
PROGRAMME DE LAVAGE POUR UN LAVE-VAISSELLE OFFRANT UN CYCLE PLUS COURT AVEC UNE EFFICACITE DE LAVAGE CONSTANTE

(30) Priorität: 27.12.2005 DE 102005062481
(43) Veröffentlichungstag der Anmeldung: 17.09.2008
(73) Patentinhaber: BSH Hausgeräte GmbH, 81739 München (DE)
(72) Erfinder: RIEGER, Roland, 73492 Rainau (DE); HEISSLER, Heinz, 89407 Dillingen (DE); FAUTH, Michael, 91785 Pleinfeld (DE); ROSENBAUER, Michael, 86756 Reimlingen (DE)
(86) Internationale Anmeldenummer: PCT/EP2006/069211
(87) Internationale Veröffentlichungsnummer: WO 2007/074022

(56) Entgegenhaltungen:
- EP-A2- 0 795 292
- CH-A5- 665 547
- DE-A1- 4 209 232

## Beschreibung

Die Erfindung betrifft ein Verfahren zum Reinigen von Spülgut in einer Geschirrspülmaschine, insbesondere Haushalts-Geschirrspülmaschine, mit wenigstens einem vorgegebenen Ablauf eines Spülprogramms, z. B. ein Intensiv-, Schon-, Automatik- oder Normalprogramm, mit einer bestimmten mechanischen und/oder thermischen Abtragungsenergie zur Erreichung eines bestimmten Reinigungs- und/der Trocknungsergebnisses, mit dem Teilprogrammschritte, z. B. Vorspülen, Reinigen, Zwischenspülen, Klarspülen und Trocknen, durchlaufen werden, wobei der vorgegebene Ablauf des Spülprogramms so ausgelegt ist, dass möglichst wenig Wasser und Energie verbraucht wird.

Die Erfindung betrifft außerdem eine Geschirrspülmaschine, insbesondere Haushalts-Geschirrspülmaschine zur Durchführung des Verfahrens umfassend einen Spülbehälter zur Aufnahme von Spülgut, eine Tür zum Öffnen und Schließen des Spülbehälters, eine Umwälzpumpe zum Aufbringen von Spülwasser auf das Spülgut, eine Heizung zum Erwärmen des Spülwassers, eine Steuereinrichtung zur Steuerung wenigstens eines vorgegebenen Ablaufs eines Spülprogrammes mit einer bestimmten mechanischen und/oder thermischen Abtragungsenergie zur Erreichung eines bestimmten Reinigungs- und/oder Trocknungsergebnisses und Mittel zur Auswahl des wenigstens eines vorgegebenen Ablaufs eines Spülprogrammes, z. B. ein Intensiv-, Schon-, Automatik- oder Normalprogramm (siehe z.B. Gebrauchsanweisung der Geschirrspülmaschine Siemens SE50T590EU). Geschirrspülmaschinen werden heute auf einen möglichst geringen Energie- und Wasserverbrauch ausgelegt. Bei Geschirrspülmaschinen mit einem Ober- und einem Unterkorb wird zu diesem Zweck beispielsweise die Reinigung des Geschirrs im Oberkorb zeitlich von der Reinigung des Geschirrs im Unterkorb getrennt. Hierzu wird eine Wasserweiche eingesetzt, die alternierend entweder die obere oder die untere Sprühebene beaufschlagt. Dadurch kommt die Geschirrspülmaschine mit einem geringeren Wasservorrat aus. Um diese geringere Wassermenge aufzuheizen wird weniger Energie benötigt.

Um den Energieverbrauch weiter zu senken wird die Wassertemperatur auf einem niedrigeren Niveau gehalten. Auch wird der Wasserdruck abgesenkt, so dass die Umwälzpumpe, durch die der Druck erzeugt wird, langsamer laufen kann und ebenfalls weniger Energie verbraucht.

Die Reinigungsleistung einer Geschirrspülmaschine hängt hauptsächlich von dem Volumenstrom und der Temperatur des Spülwassers, von dem Düsendruck und von der Laufzeit ab. Es wirken sich folglich alle oben angeführten Maßnahmen dahingehend aus, dass die wählbaren Spülprogramme mehr Zeit benötigen um die gleiche Reinigungsleistung erzielen zu können.

Die Trocknungsleistung der Geschirrspülmaschine hängt von dem Volumenstrom an Trocknungsluft, dessen Temperatur und der Trocknungszeit ab. Auch hier wirken sich energiesparende Maßnahmen wie die Absenkung der Temperatur auf die Trocknungsdauer aus.

Meist ist die längere Betriebszeit bei diesen sparsamen Geschirrspülmaschinen unproblematisch, es gibt jedoch auch Situationen in denen der Wunsch entsteht, möglichst schnell das schmutzige Geschirr wieder zur Verfügung zu haben. Bei den heute bekannten Schnellprogrammen lässt sich zwar die Spüldauer reduzieren, dies geht jedoch auf Kosten des Reinigungs- und Trocknungsergebnisses. Diese Schnellprogramme können daher nur bei leicht verschmutztem Geschirr ohne Verkrustungen verwendet werden.

Der Erfindung liegt die Aufgabe zugrunde, eine moderne und sparsame Geschirrspülmaschine so zu steuern, dass eine Verkürzung der für das gewählte Spülprogramm benötigten Zeit in Ausnahmefällen möglich ist, ohne dass dabei das Reinigungs- oder Trocknungsergebnis verschlechtert wird.

Gelöst wird die Aufgabe gemäß der Erfindung durch ein Verfahren mit den Merkmalen von Anspruch 1 und eine Geschirrspülmaschine mit den Merkmalen von Anspruch 6.

In einem erfindungsgemäßen Verfahren zum Reinigen von Spülgut in einer Geschirrspülmaschine, insbesondere Haushalts-Geschirrspülmaschine, mit wenigstens einem vorgegebenen Ablauf eines Spülprogramms, z. B. ein Intensiv-, Schon-, Automatik- oder Normalprogramm, mit einer bestimmten mechanischen und/oder thermischen Abtragungsenergie zur Erreichung eines bestimmten Reinigungs- und/der Trocknungsergebnisses, mit dem Teilprogrammschritte, z. B. Vorspülen, Reinigen, Zwischenspülen, Klarspülen und Trocknen, durchlaufen werden, wobei der vorgegebene Ablauf des Spülprogramms so ausgelegt ist, dass möglichst wenig Wasser und Energie verbraucht wird, wobei wenigstens ein zusätzlicher vorgegebener Ablauf eines Spülprogramms, z. B. ein Schnellintensiv-, Schnellschon-, Schnellautomatik- oder Schnellnormalprogramm, mit ungefähr der gleichen mechanischen und/oder thermischen Abtragungsenergie zur Erreichung des selben oder ungefähr desselben bestimmten Reinigungs- und/oder Trocknungsergebnisses vorgesehen ist, bei dem und die Laufzeit des Spülprogramms verkürzt wird. Die mechanische Abtragungsenergie ist das Produkt aus Volumenstrom (des Spülwassers beim Reinigen), Düsendruck (des Spülwasser beim Reinigen) und Laufzeit bei jeweils konstanten Werten für Volumenstrom und Düsendruck über die Laufzeit. Sind diese Werte über die Laufzeit veränderlich, ist das Integral zu bilden. Die thermische Abtragungsenergie ist das Integral aus der Temperatur über die entsprechende Einwirk- bzw. Laufzeit. Die Temperatur unterliegt aufgrund der notwendigen Aufheizphase Schwankungen, so dass die Bildung eines Integral zur genauen Bestimmung der thermischen Abtragungsenergie notwendig ist.

In einer weiteren Ausführungsform wird der elektrische Energieverbrauch erhöht.

Durch den zusätzlichen vorgegebenen Ablauf eines Spülprogramms, bei dem der Wasser- und/oder Energieverbrauch erhöht wird, wird einem Nutzer die Möglichkeit gegeben, eine Geschirrspülmaschine, die unter normalen Umständen sparsam mit Wasser und Energie umgeht, in einem Ausnahmefall so zu programmieren, dass die Dauer des Spülprogramms verkürzt wird und das Geschirr mit gleicher Reinigungs- und/oder Trocknungsleistung schneller zur Verfügung steht. Bei den bereits vorgegebenen Abläufen kann es sich um festgelegte Abläufe handeln, aber es können auch z.B. solche Abläufe vorgegeben sein, bei denen erst der Verschmutzungsgrad des Geschirrs ermittelt und dann automatisch ein an den ermittelten Verschmutzungszustand angepasstes Programm erstellt wird (sogenannte Automatikporgramme). Auch solche Programme können erfindungsgemäß so verändert werden, dass unter Einhaltung des zu erzielenden Reinigungs- und/oder Trocknungsergebnisses die Programmzeit verkürzt wird.

Um so eine Programmverkürzung zu erreichen kann die Drehzahl der Umwälzpumpe erhöht werden. Dadurch steigt der Wasserdruck und erhöht den Düsendruck in der oberen und unteren Sprühebene. Die mechanische Abtragungsenergie wird dadurch gesteigert und die Programmzeit kann verkürzt werden. Die mechanische Abtragungsenergie kann mit dem Produkt aus Volumenstrom, Düsendruck und Laufzeit definiert werden.

Als weitere Maßnahme wird erfindungsgemäß die Wasserweiche, die den Volumenstrom zeitlich zwischen Ober- und Unterkorb aufteilt so geschaltet, dass Ober- und Unterkorb gleichzeitig versorgt werden. Die erforderliche Menge an Spülwasser je Teilprogrammschritt ist hier höher. Außerdem kann die Drehzahl der Umwälzpumpe noch weiter erhöht werden, weil die Umwälzpumpe Ober- und Unterkorb gleichzeitig versorgt.

In vorteilhafter Weise wird während wenigstens eines Teilprogrammschrittes, z. B. Vorspülen, Reinigen, Zwischenspülen, Klarspülen oder Trocknen, die Temperatur erhöht. Für die Spül- und Reinigungsschritte muss hierfür das durchgepumpte Spülwasser auf eine höhere Temperatur aufgeheizt werden. Für den Trocknungsschritt wird die Trocknungsluft stärker erwärmt oder im Klarspülen die Temperatur erhöht, je nachdem welches Trocknungsverfahren angewendet wird. Besonders vorteilhaft wird diese Maßnahme auf alle Reinigungs- und Trocknungsschritte angewandt. Auf diese Weise lässt sich die Zeit für einen Programmdurchlauf erheblich verkürzen und es lässt sich trotzdem das gleiche Reinigungs- und/oder Trocknungsergebnis erzielen.

Eine erfindungsgemäße Geschirrspülmaschine, insbesondere Haushalts-Geschirrspülmaschine, zur Durchführung eines Verfahrens umfaßt einen Spülbehälter zur Aufnahme von Spülgut, eine Tür zum Öffnen und Schließen des Spülbehälters, eine Umwälzpumpe zum Aufbringen von Spülwasser auf das Spülgut, eine Heizung zum Erwärmen des Spülwassers, eine Steuereinrichtung zur Steuerung wenigstens eines vorgegebenen Ablaufs eines Spülprogrammes zur Erreichung eines bestimmten Reinigungs- und/oder Trocknungsergebnisses und Mittel zur Auswahl des wenigstens eines vorgegebenen Ablaufs eines Spülprogrammes mit einer bestimmten mechanischen und/oder thermischen Abtragungsenergie, z. B. ein Intensiv-, Schon-, Automatik- oder Normalprogramm, wobei wenigstens ein zusätzlicher vorgegebener Ablauf eines Spülprogrammes, z. B. ein Schnellintensiv-, Schnellschon-, Schnellautomatik- oder Schnellnormalprogramm, mit ungefähr der gleichen mechanischen und/oder thermischen Abtragungsenergie zur Erreichung des selben oder ungefähr des selben bestimmten Reinigungs- und/oder Trocknungsergebnisses bei einer verkürzten Laufzeit des Spülprogrammes ausführbar ist vorzugsweise durch eine Erhöhung des Verbrauches an Wasser und/oder vorzugsweise elektrischer Energie

Vorzugsweise ist mit einem Bedienelement, z. B. einer Taste oder einem Knopf, wenigstens ein vorgegebener Ablauf eines Spülprogrammes, der vom Mittel zur Auswahl des wenigstens einen vorgegebenen Ablaufs eines Spülprogrammes auswählbar ist, als zusätzlich vorgegebener Ablauf eines Spülprogrammes ausführbar und/oder auswählbar.

Vorzugsweise ist mit einem Bedienelement, z. B. einer Taste, der wenigstens eine zusätzliche vorgegebener Ablauf eines Spülprogrammes auswählbar und/oder ausführbar.

Bei den meisten Haushalts-Geschirrspülmaschinen sind verschiedene Spülprogramme vorgesehen, die je nach Verschmutzungsgrad oder Art des zu reinigenden Geschirrs angewählt werden können. In einem Ausführungsbeispiel der Erfindung wirkt sich die Auswahl des zusätzlichen vorgegebenen Spülprogramms auf alle anderen vorgegebenen Spülprogramme aus. Das bedeutet, dass bei der Anwahl des zusätzlichen vorgegebenen Spülprogramms bei allen anderen Spülprogrammen die Programmdauer verkürzt wird. Es kann folglich weiterhin das für die Art und den Verschmutzungsgrad des Geschirrs richtige Programm ausgewählt werden, wobei aber bei dem gewählten Programm die Programmdauer verkürzt wird.

Als Bedienelement weisen Geschirrspülmaschinen üblicherweise eine Knopfleiste oder einen Drehknopf auf. Bei einem Ausführungsbeispiel einer erfindungsgemäßen Geschirrspülmaschine wird der zusätzliche vorgegebene Ablauf eines Spülprogramms mit dem selben Bedienelement angewählt. Das bedeutet, dass die Zeitverkürzung nur einem bestimmten Programm zugeordnet ist und dieses Zeitspar-Programm beispielsweise mit einem Drehknopf in der gleichen Art wie die anderen Programme angewählt werden kann. Bei dem Drehknopf ist zu diesem Zweck ein zusätzlicher anwählbarer Programmpunkt einer bestimmten Stellung des Drehknopfes zugeordnet, bei einer Knopfleiste ist ein zusätzlicher Knopf vorgesehen.

Besonders vorteilhaft kann bei einer Geschirrspülmaschine jedoch jedes der anwählbaren Programme in verkürzter Zeit absolviert werden. Hierzu ist ein gesonderter Knopf vorgesehen, dessen Betätigung sich sowohl bei einer Geschirrspülmaschine mit Drehknopf als auch bei einem Gerät mit Knopfleiste auf alle möglichen Einstellungen auswirkt.

Vorzugsweise kann die Geschirrspülmaschine ein Anzeigeelement, z. B. eine Leucht-LED, aufweisen, welches den Betrieb oder die Eingabe des zusätzlicher vorgegebener Ablauf eines Spülprogramms zur Erreichung des selben oder ungefähr desselben bestimmten Reinigungsergebnisses anzeigt.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

Es zeigen:
- Figur 1: die Bedienblende einer erfindungsgemäßen Geschirrspülmaschine mit einem Drehknopf und
- Figur 2: die Bedienblende einer erfindungsgemäßen Geschirrspülmaschine mit einer Knopfleiste.

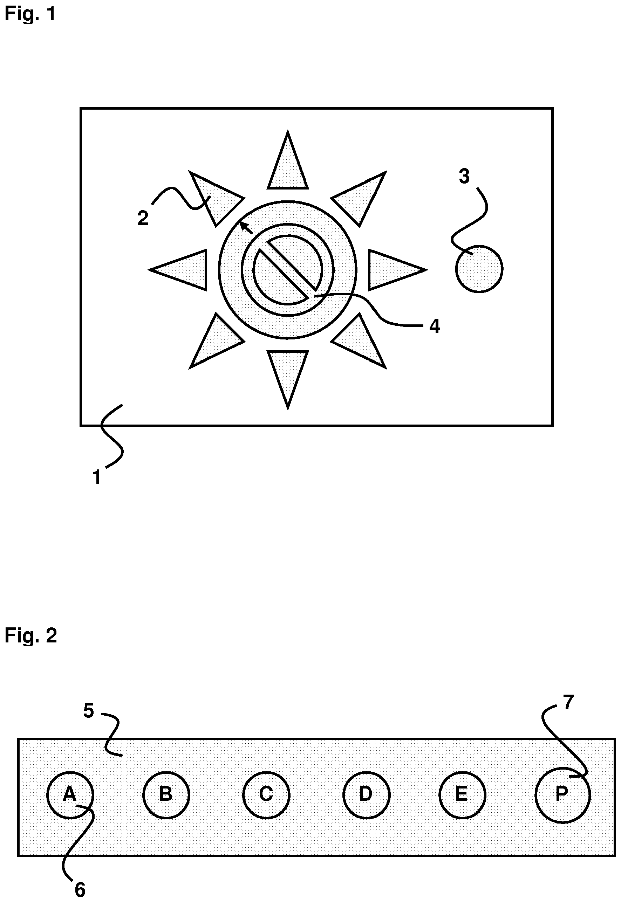

Die in Figur 1 gezeigte Bedienblende 1 weist einen Drehknopf 4 auf. Die einzelnen Spülprogramme sind symbolisch durch die Markierungen 2 dargestellt. Zur Auswahl des gewünschten Programms wird der Drehknopf 4 mit dem dargestellten Pfeil auf die Markierung 2 für das entsprechende Programm gestellt.

Die Bedienblende 1 weist zusätzlich einen Knopf 3 auf, der besonders auffällig gekennzeichnet sein kann. Die Aktivierung dieses Knopfes 3 sollte unbedingt visuell gut erkennbar sein. So könnte beispielsweise eine hier nicht dargestellte LED zu leuchten oder zu blinken beginnen. Genauso wäre es möglich, dass der Knopf 3 selbst in seiner gedrückten Stellung leuchtet oder blinkt.

Das Drücken des Knopfes 3 könnte sich nun auf alle Programme, die mit dem Drehknopf 4 angewählt werden können, in gleicher Weise auswirken. So könnte beispielsweise das drücken des Knopfes 3 bei den Spül- und Reinigungsschritten eine Temperaturerhöhung von 10°C bewirken. Auch könnte bei allen Programmen die Drehzahl der Umwälzpumpe erhöht werden, so dass in den einzelnen Sprühebenen mit höheren Düsendrücken gearbeitet werden kann. Bei allen Programmen würde sich dadurch eine Verkürzung der Spüldauer ergeben, ohne dass das Reinigungsergebnis verschlechtert würde.

Das Drücken des Knopfes 3 kann sich aber auch auf jedes Programm anders auswirken. So kann z.B. ein Schonprogramm, welches für Geschirr mit empfindlichem Dekor verwendet wird, so verändert werden, dass lediglich der Wasserstand in der Maschine leicht erhöht und die Wasserweiche so geschaltet wird, dass Ober- und Unterkorb nicht mehr alternierend sondern gleichzeitig mit Spülwasser versorgt werden. Auf diese Weise wird eine Programmverkürzung möglich, bei der lediglich eine geringe Erhöhung des Wasserverbrauchs in Kauf genommen werden muss. Das empfindliche Geschirr wird dadurch aber nicht stärker beansprucht.

Die Bedienblende aus Figur 2 ist als Knopfleiste 5 ausgebildet. Hier sind die anwählbaren Programme den Knöpfen 6 zugeordnet, die hier symbolisch mit den Buchstaben A bis E gekennzeichnet sind. Der Knopf 7, der mit dem Buchstaben P bezeichnet ist, muss in seiner aktiven Stellung genauso gekennzeichnet sein wie der Knopf 3 in Figur 1. Um die besondere Funktion von Knopf 7 herauszustellen ist dieser größer als die anderen Knöpfe ausgebildet.

Der Knopf 7 kann einem Schnellprogramm zugeordnet sein, mit dem das gleiche Reinigungs- und Trocknungsergebnis erzielt wird wie bei der Wahl eines Universalprogramms, welches beispielsweise mit dem Knopf C angewählt wird. Bei diesem Schnellprogramm wird allerdings die benötigte Wassermenge erhöht und es steigt der Energieverbrauch.

Aber auch hier ist es denkbar dass der Knopf mit der Bezeichnung P beliebig einem anderen Programmknopf A bis E zugeschaltet werden kann und sich dessen Aktivierung ganz unterschiedlich auf die verschiedenen Spülprogramme auswirkt. Im Folgenden werden einige Beispiele dargestellt und erläutert:

**Beispiel 1**

| Schnell-programm | Reinigung-stemperatur | Klarspül-temperatur | Wasserweiche | Drehzahl der Umwälzpumpe | Trocknungstemperatur |
|---|---|---|---|---|---|
| ohne | 50°C | 65°C | alternierend | mittlerer Bereich | 65°C |
| mit | 50°C | 65°C | gleichzeitig | hoher Bereich | 65°C |
| mit | 50°C | 65°C | gleichzeitig | Mittlerer Bereich | 65°C |

Bei diesem Beispiel wird - wie bei dem oben beschriebenen Schonprogramm - durch das Zuschalten des Schnellprogramms lediglich die Steuerung der Wasserweiche (Wasserweiche steuert entweder beide Sprüharme gleichzeitg mit Spülwasser an oder die Sprüharme alternierend; nicht dargestellt) so geändert, dass Ober- und Unterkorb nicht mehr alternierend sondern gleichzeitig mit Wasser beschickt werden. Um den höheren Volumenstrom an Spülwasser ohne Reduzierung des Düsendrucks in den Sprühebenen erzeugen zu können, kann zusätzlich die Drehzahl der Umwälzpumpe und der Wasserstand in dem Gerät erhöht. Dadurch erhöht sich der Wasserverbrauch von z. B. geringfügig ungefähr von 14 auf 15 Liter und der Energieverbrauch geringfügig z. B. ungefähr von 1,05 auf 1,44 kWh. Die benötigte Zeit für den Ablauf eines Spülprogramms lässt sich auf diese Weise von ca. 140 auf ca. 70 min reduzieren bei gleicher Reinigungs- und Trocknungsleistung.

**Beispiel 2**

| Schnellprogramm | Reinigungstemperatur | Klarspültemperatur | Wasserweiche | Drehzahl der Umwälzpumpe | Trocknungstemperatur |
|---|---|---|---|---|---|
| ohne | 50°C | 65°C | alternierend | mittlerer Bereich | 65°C |
| mit | 72°C | 72°C | alternierend | mittlerer Bereich | 72°C |

In dem hier gezeigten Beispiel wird durch das Zuschalten des Schnellprogramms in allen Reinigungs- und Spülschritten die Temperatur erhöht. Auch die Trocknungstemperatur wird erhöht. Realisiert wird die höhere Wassertemperatur durch häufigere Heizphasen. Durch die gezeigten Maßnahmen erhöht sich der Energieverbrauch ungefähr z. B. von 1,05 auf 1,44 kWh, während der Wasserverbrauch unverändert bleibt. Die benötigte Programmzeit verringert sich auf die Hälfte von ca. 140 auf ca. 70 min.

**Beispiel 3**

| Schnell-programm | Reinigungs-temperatur | Klarspül-temperatur | Wasserweiche | Drehzahl der Umwälzpumpe | Trocknungstemperatur |
|---|---|---|---|---|---|
| ohne | 50°C | 65°C | alternierend | mittlerer Bereich | 65°C |
| mit | 50°C | 65°C | alternierend | hoher Bereich | 65°C |

In diesem dritten Beispiel wird nur die Drehzahl der Umwälzpumpe und damit der Düsendruck in den Sprühebenen erhöht. Auf diese Weise steigert sich der Energieverbrauch lediglich z. B. ungefähr von 1,05 auf 1,44 kWh, während der Wasserverbrauch unverändert bleibt. Die benötigte Zeit reduziert sich von ca. 140 auf ca. 110 min.

Selbstverständlich lassen sich die beschriebenen Maßnahmen in beliebiger Weise kombinieren um noch mehr Zeit einsparen zu können. Allerdings erhöhen sich dementsprechend der Energie- bzw. Wasserverbrauch.

## Patentansprüche

1. Verfahren zum Reinigen von Spülgut in einer Geschirrspülmaschine, insbesondere Haushalts-Geschirrspülmaschine, mit wenigstens einem vorgegebenen Ablauf eines Spülprogramms, z. B. ein Intensiv-, Schon-, Automatik- oder Normalprogramm, mit einer bestimmten mechanischen und/oder thermischen Abtragungsenergie zur Erreichung eines bestimmten Reinigungs- und/der Trocknungsergebnisses, mit dem Teilprogrammschritte, z. B. Vorspülen, Reinigen, Zwischenspülen, Klarspülen und Trocknen, durchlaufen werden, wobei der vorgegebene Ablauf des Spülprogramms so ausgelegt ist, dass möglichst wenig Wasser und Energie verbraucht wird, wobei wenigstens ein zusätzlicher vorgegebener Ablauf eines Spülprogramms, z. B. ein Schnellintensiv-, Schnellschon-, Schnellautomatik- oder Schnellnormalprogramm, mit ungefähr der gleichen mechanischen und/oder thermischen Abtragungsenergie zur Erreichung des selben oder ungefähr desselben bestimmten Reinigungs- und/oder Trocknungsergebnisses vorgesehen ist, bei dem die Laufzeit des Spülprogramms verkürzt wird, **dadurch gekennzeichnet, dass** bei dem zusätzlichen vorgegebenen Ablauf eines Spülprogramms eine Wasserweiche, welche den Volumenstrom zeitlich zwischen Ober- und Unterkorb der Geschirrspülmaschine aufteilt, so geschaltet wird, dass Ober- und Unterkorb nicht mehr alternierend, sondern gleichzeitig mit Spülwasser beaufschlagt werden, wodurch der Wasserverbrauch erhöht wird.

2. Verfahren nach Anspruch 1, **dadurch gekennzeichnet, dass** der elektrische Energieverbrauch erhöht wird.

3. Verfahren nach Anspruch 1 oder 2, **dadurch gekennzeichnet, dass** bei dem zusätzlichen vorgegebenen Ablauf eines Spülprogramms die Drehzahl einer Umwälzpumpe für die Umwälzung des Spülwassers erhöht wird, um die mechanische Abtragenergie am Spülgut zu erhöhen.

4. Verfahren nach einem der vorhergehenden Ansprüche **dadurch gekennzeichnet, dass** bei dem zusätzlichen vorgegebenen Ablauf eines Spülprogramms die Temperatur während wenigstens eines Teilprogrammschrittes erhöht wird, um die thermische Abtragungsenergie am Spülgut und/oder die Trocknungsleistung zu erhöhen.

5. Verfahren nach einem der vorhergehenden Ansprüche, **dadurch gekennzeichnet, dass** mehrere verschiedene Spülprogramme vorgegeben sind und durch die Auswahl des zusätzlich vorgegebenen Spülprogramms bei allen vorgegebenen Spülprogrammen Wasserverbrauch oder Wasser- und Energieverbrauch erhöht und die Laufzeit gleichzeitig verkürzt wird.

6. Geschirrspülmaschine, insbesondere Haushalts-Geschirrspülmaschine, zur Durchführung eines Verfahrens nach einem oder mehreren der Ansprüche 1 bis 4, umfassend
- einen Spülbehälter zur Aufnahme von Spülgut,
- eine Tür zum Öffnen und Schließen des Spülbehälters
- eine Umwälzpumpe zum Aufbringen von Spülwasser auf das Spülgut,
- eine Heizung zum Erwärmen des Spülwassers,
- eine Steuereinrichtung zur Steuerung wenigstens eines vorgegebenen Ablaufs eines Spülprogrammes zur Erreichung eines bestimmten Reinigungs- und/oder Trocknungsergebnisses und
- Mittel (4, 6) zur Auswahl des wenigstens eines vorgegebenen Ablaufs eines Spülprogrammes mit einer bestimmten mechanischen und/oder thermischen Abtragungsenergie, z. B. ein Intensiv-, Schon-, Automatik-, oder Normalprogramm
wobei wenigstens ein zusätzlicher vorgegebener Ablauf eines Spülprogrammes, z. B. ein Schnellintensiv-, Schnellschon-, Schnellautomatik-, oder Schnellnormalprogramm, mit ungefähr der gleichen mechanischen und/oder thermischen Abtragungsenergie zur Erreichung des selben oder ungefähr des selben bestimmten Reinigungs- und/oder Trocknungsergebnisses bei einer verkürzten Laufzeit des Spülprogrammes ausführbar ist, **dadurch gekennzeichnet, dass** bei dem zusätzlichen vorgegebenen Ablauf eines Spülprogramms eine Wasserweiche, welche den Volumenstrom zeitlich zwischen Ober- und Unterkorb der Geschirrspülmaschine aufteilt, so geschaltet ist, dass Ober- und Unterkorb nicht mehr alternierend, sondern gleichzeitig mit Spülwasser beaufschlagt werden, wodurch der Wasserverbrauch erhöht wird.

7. Geschirrspülmaschine nach Anspruch 6, **dadurch gekennzeichnet, dass** eine Erhöhung des Verbrauches an elektrischer Energie ausführbar ist.

8. Geschirrspülmaschine, insbesondere Haushalts-Geschirrspülmaschine nach Anspruch 5, 6 oder 7, **dadurch gekennzeichnet, dass** mit einem Bedienelement (3, 7), z. B. einer Taste oder einem Knopf, wenigstens ein vorgegebener Ablauf eines Spülprogrammes, der vom Mittel (4) zur Auswahl des wenigstens einen vorgegebenen Ablaufs eines Spülprogrammes auswählbar ist, als zusätzlich vorgegebener Ablauf eines Spülprogrammes ausführbar und/oder auswählbar ist.

9. Geschirrspülmaschine nach Anspruch 5, **dadurch gekennzeichnet, dass** mit einem Bedienelement (7), z. B. einer Taste, der wenigstens eine zusätzliche vorgegebener Ablauf eines Spülprogrammes auswählbar und/oder ausführbar ist.

10. Geschirrspülmaschine nach einem der Ansprüche 7 bis 9, **dadurch gekennzeichnet, dass** ein Anzeigeelement, z. B. eine Leucht-LED, vorhanden ist, welches den Betrieb oder die Eingabe des zusätzlicher vorgegebener Ablauf eines Spülprogramms zur Erreichung des selben oder ungefähr desselben bestimmten Reinigungsergebnisses anzeigt.

## Claims

1. Method for cleaning items to be washed in a dishwasher, in particular a domestic dishwasher, with at least one predetermined sequence of a wash program, e.g. an intensive, low-temperature, automatic or standard program, with a specific mechanical and/or thermal soiling removal energy to achieve a specific cleaning and/or drying result, with which sub-program steps, e.g. pre-rinse, cleaning, intermediate rinse, final rinse and drying, are carried out, with the predetermined sequence of the wash program being configured so that the minimum quantity of water and energy is used, wherein at least one additional predetermined sequence of a wash program, e.g. a rapid intensive, rapid low-temperature, rapid automatic or rapid standard program, with approximately identical mechanical and/or thermal soiling removal energy is provided to achieve the same or approximately the same specific cleaning and/or drying result, with which the wash program cycle is shortened, **characterised in that** with the additional predetermined wash program sequence a water switch, which divides the volume flow between the upper and lower basket of the dishwasher in terms of time, is switched so that the upper and lower baskets are no longer supplied with washing water in an alternating manner, but simultaneously, which results in the water consumption being increased.

2. Method according to claim 1, **characterised in that** electrical energy consumption is increased.

3. Method according to claim 1 or 2, **characterised in that** with the additional predetermined wash program sequence the speed of a circulating pump for circulating the washing water is increased to increase the mechanical soiling removal energy acting on the items to be washed.

4. Method according to one of the preceding claims, **characterised in that** with the additional predetermined wash program sequence the temperature is increased during at least one sub-program step, to increase the thermal soiling removal energy acting on the items to be washed and/or the drying performance.

5. Method according to one of the preceding claims, **characterised in that** a number of different wash programs are predetermined and selecting the additionally predetermined wash program increases water consumption or water and energy consumption for all predetermined wash programs, simultaneously shortening the cycle.

6. Dishwasher, in particular a domestic dishwasher, for implementing a method according to one or more of claims 1 to 4, having
- a wash compartment to hold the items to be washed,
- a door to open and close the wash compartment,
- a circulating pump to apply washing water to the items to be washed,
- a heating unit to heat the washing water,
- a control facility to control at least one predetermined wash program sequence to achieve a specific cleaning and/or drying result and
- means (4, 6) for selecting the at least one predetermined wash program sequence with a specific mechanical and/or thermal soiling removal energy, e.g. an intensive, low-temperature, automatic or standard program,
wherein at least one additional predetermined sequence of a wash program, e.g. a rapid intensive, rapid low-temperature, rapid automatic or rapid standard program, with approximately identical mechanical and/or thermal soiling removal energy can be executed to achieve the same or approximately the same specific cleaning and/or drying result, with a shortened wash program cycle, **characterised in that** with the additional predetermined wash program sequence a water switch, which divides the volume flow between the upper and lower basket of the dishwasher in terms of time, is switched so that the upper and lower baskets are no longer supplied with washing water in an alternating manner, but simultaneously, which results in the water consumption being increased.

7. Dishwasher according to claim 6, **characterised in that** it is possible to execute an increase in electrical energy consumption.

8. Dishwasher, in particular a domestic dishwasher according to claim 5, 6 or 7, **characterised in that** an operating element (3, 7), e.g. a button or knob, can be used to execute and/or select as an additionally predetermined wash program sequence at least one predetermined wash program sequence, which can be selected by the means (4) for selecting the at least one predetermined wash program sequence.

9. Dishwasher according to claim 5, **characterised in that** an operating element (7), e.g. a button, can be used to select and/or execute the at least one additional predetermined wash program sequence.

10. Dishwasher according to one of claims 7 to 9, **characterised in that** a display element, e.g. an LED, is present, which indicates the operation or input of the additional predetermined wash program sequence to achieve the same or approximately the same specific cleaning result.

## Revendications

1. Procédé de nettoyage de produits à laver dans un lave-vaisselle, notamment dans un lave-vaisselle à usage domestique, comprenant au moins un déroulement prédéfini d'un programme de lavage, par ex. un programme intensif, un programme doux, un programme automatique ou un programme normal, avec une énergie d'enlèvement mécanique et/ou thermique déterminée pour l'obtention d'un résultat de nettoyage et/ou de séchage déterminé, avec lequel des étapes de programme partiel, par ex. prélavage, nettoyage, rinçage intermédiaire, rinçage et séchage, sont effectuées, le déroulement prédéterminé du programme de lavage étant conçu de manière à ce qu'il soit consommé le moins possible d'eau et d'énergie, au moins un déroulement prédéfini supplémentaire d'un programme de lavage, par ex. un programme intensif rapide, un programme doux rapide, un programme automatique rapide ou un programme normal rapide, avec approximativement la même énergie d'enlèvement mécanique et/ou thermique pour l'obtention du résultat de nettoyage et/ou de séchage déterminé identique ou approximativement identique étant ménagé, dans lequel le temps d'exécution du programme de lavage est raccourci, **caractérisé en ce que** lors du déroulement prédéfini supplémentaire d'un programme de lavage, un distributeur d'eau, lequel répartit le flux volumique temporellement entre un panier supérieur et un panier inférieur du lave-vaisselle, est commuté de manière à ce que le panier supérieur et le panier inférieur ne soient plus alimentés de manière alternante mais simultanée avec l'eau de lavage, sur quoi la consommation d'eau est augmentée.

2. Procédé selon la revendication 1, **caractérisé en ce que** la consommation d'énergie électrique est augmentée.

3. Procédé selon la revendication 1 ou 2, **caractérisé en ce que** lors du déroulement prédéfini supplémentaire d'un programme de lavage, la vitesse de rotation d'une pompe de circulation pour la circulation de l'eau de lavage est augmentée afin d'augmenter l'énergie d'enlèvement mécanique sur les produits à laver.

4. Procédé selon l'une quelconque des revendications précédentes, **caractérisé en ce que** lors du déroulement prédéfini supplémentaire d'un programme de lavage, la température est augmentée pendant au moins une étape de programme partiel afin d'augmenter l'énergie d'enlèvement thermique sur les produits à laver et/ou la performance de séchage.

5. Procédé selon l'une quelconque des revendications précédentes, **caractérisé en ce que** plusieurs programmes de lavage différents sont prédéfinis et **en ce qu'**en raison de la sélection du programme de lavage prédéfini supplémentaire, la consommation d'eau ou la consommation d'eau et d'énergie, pour tous les programmes de lavage prédéfinis, est augmentée et le temps d'exécution est simultanément raccourci.

6. Lave-vaisselle, notamment lave-vaisselle à usage domestique, pour la réalisation d'un procédé selon une quelconque ou plusieurs des revendications 1 à 4, comprenant
- une cuve de lavage destinée à recevoir les produits à laver,
- une porte pour ouvrir et fermer la cuve de lavage
- une pompe de circulation pour appliquer l'eau de lavage sur les produits à laver,
- un chauffage pour échauffer l'eau de lavage,
- un dispositif de commande pour commander au moins un déroulement prédéfini d'un programme de lavage afin d'obtenir un résultat déterminé de nettoyage et/ou de séchage et
- des moyens (4, 6) pour la sélection de l'au moins un déroulement prédéfini d'un programme de lavage avec une énergie d'enlèvement mécanique et/ou thermique déterminée, par ex. un programme intensif, un programme doux, un programme automatique ou un programme normal,
au moins un déroulement prédéfini supplémentaire d'un programme de lavage, par ex. un programme intensif rapide, un programme doux rapide, un programme automatique rapide ou un programme normal rapide, avec approximativement la même énergie d'enlèvement mécanique et/ou thermique pour l'obtention du résultat de nettoyage et/ou de séchage déterminé identique ou approximativement identique étant réalisable, **caractérisé en ce que** lors du déroulement prédéfini supplémentaire d'un programme de lavage, un distributeur d'eau, lequel répartit le flux volumique temporellement entre un panier supérieur et un panier inférieur du lave-vaisselle, est commuté de manière à ce que le panier supérieur et le panier inférieur ne soient plus alimentés de manière alternante mais simultanée avec l'eau de lavage, sur quoi la consommation d'eau est augmentée.

7. Lave-vaisselle selon la revendication 6, **caractérisé en ce qu'**une augmentation de la consommation d'énergie électrique est réalisable.

8. Lave-vaisselle, notamment lave-vaisselle à usage domestique selon la revendication 5, 6, ou 7, **caractérisé en ce qu'**à l'aide d'un élément de commande (3, 7), par ex. à l'aide d'une touche ou d'un bouton, au moins un déroulement prédéfini d'un programme de lavage, qui est sélectionnable par le moyen (4) de sélection de l'au moins un déroulement prédéfini d'un programme de lavage, est réalisable et/ou sélectionnable en tant que déroulement prédéfini supplémentaire d'un programme de lavage.

9. Lave-vaisselle selon la revendication 5, **caractérisé en ce que** l'au moins un déroulement prédéfini supplémentaire d'un programme de lavage est sélectionnable et/ou réalisable à l'aide d'un élément de commande (7), par ex. à l'aide d'une touche.

10. Lave-vaisselle selon l'une quelconque des revendications 7 à 9, **caractérisé en ce qu'**un élément d'affichage, par ex. une LED lumineuse, est disponible, lequel indique le fonctionnement ou l'entrée du déroulement prédéfini supplémentaire d'un programme de lavage pour l'obtention du résultat de nettoyage déterminé identique ou approximativement identique.
